# EUROPÄISCHE PATENTSCHRIFT

(11) **EP 3 371 558 B1**
(45) Veröffentlichungstag und Bekanntmachung des Hinweises auf die Patenterteilung: **30.06.2021**
(21) Anmeldenummer: 16784791.2
(22) Anmeldetag: 19.10.2016
(51) Int. Cl.: G01F 15/14, G01F 1/66

(54) **MESSEINRICHTUNG ZUM ERFASSEN WENIGSTENS EINES MESSWERTS EINES FLUIDEN MEDIUMS**
MEASURING DEVICE FOR DETECTING AT LEAST ONE MEASUREMENT VALUE OF A FLUID MEDIUM
DISPOSITIF DE MESURE POUR DÉTECTER AU MOINS UNE VALEUR DE MESURE D'UN MILIEU FLUIDE

(30) Priorität: 05.11.2015 DE 102015014267
(43) Veröffentlichungstag der Anmeldung: 12.09.2018
(73) Patentinhaber: Diehl Metering GmbH, 91522 Ansbach (DE)
(72) Erfinder: BAER, Malte, 90478 Nürnberg (DE); ÖFELEIN, Wilhelm, 91522 Ansbach (DE); KROEMER, Harald, 91522 Ansbach (DE)
(74) Vertreter: Diehl Patentabteilung
(86) Internationale Anmeldenummer: PCT/EP2016/001734
(87) Internationale Veröffentlichungsnummer: WO 2017/076486

(56) Entgegenhaltungen:
- DE-A1-102012 110 665
- DE-A1-102012 110 665
- DE-B3-102005 009 675
- DE-B3-102005 009 675
- US-A1- 2010 242 590
- US-A1- 2012 247 225
- US-A1- 2012 247 225

## Beschreibung

Die Erfindung betrifft eine Messeinrichtung zum Erfassen wenigstens eines Messwerts eines fluiden Mediums, umfassend ein Messrohr mit einer daran und/oder darin angeordneten Messvorrichtung sowie eine außerhalb des Messrohrs angeordnete Steuerungs- und/oder Verarbeitungseinrichtung, wobei die Messvorrichtung mit der Steuerungs- und/oder Verarbeitungseinrichtung über eine oder mehrere Kabelverbindungen, die au-ßerhalb des Messrohrs zur Steuerungs- und/oder Verarbeitungseinrichtung laufen, verbunden ist.

Solche Messeinrichtungen sind beispielsweise in Form von Wasser-, Wärme-, Klima- oder Gaszählern bekannt. Sie umfassen ein Messrohr sowie eine an oder in dem Messrohr angeordnete Messvorrichtung, beispielsweise in Form von Ultraschallwandlern, die in einem Sende- oder Empfangsmodus betrieben werden, in Form eines Flügelrades, dessen Rotation abgetastet wird, oder ähnlichem. Die mit der Messvorrichtung, gleich wie diese ausgebildet ist, erfassten Informationen respektive Signale werden über ein oder mehrere Kabelverbindungen an eine zum Messrohr externe Steuerungs- und/oder Verarbeitungseinrichtung gegeben, die diese aufgenommenen Informationen respektive Signale verarbeitet und die gegebenenfalls auch den Betrieb der Messvorrichtung steuert. Anhand dieser aufgenommenen Informationen respektive gestützt auf die Signalauswertung erfolgt sodann beispielsweise die Verbrauchserfassung und ähnliches.

Bei bekannten Messeinrichtungen liegen die Kabelverbindungen frei, das heißt, sie laufen freihängend von der Messvorrichtung zur Steuerungs- und/oder Verarbeitungseinrichtung. Sie sind höchstenfalls über mitunter dünnwandige Metallgehäuse, die das Messrohr umgeben, geschützt. Solche Konstruktionen sind jedoch aufwändig und vergleichsweise teuer. Anderweitig induzierte Messfehler, die auf physikalische Umgebungsparameter zurückzuführen sind, können hierüber nicht reduziert werden.

Aus DE 10 2012 110 665 A1 ist ein Durchflussmessgerät bekannt, umfassend ein Messrohr, an dem seitlich gegenüberliegend ein Spulenpaar sowie ein Messelektrodenpaar zur Bestimmung der Durchflussmenge basierend auf einem magnetisch-induktiven Messverfahren angeordnet ist. Die Spulen sind über Rückführbleche, die um das Messrohr herum angeordnet sind, miteinander verbunden. Über der Anordnung aus Spulen, Rückführblechen und Messrohr ist ein mehrteiliges Kunststoffgehäuse vorgesehen, das diese Anordnung wasserdicht einschließt. Mit den Messelektroden verbundene Kabel werden über einen Stutzen des Kunststoffgehäuses nach außen geführt. Die Kabel sind hierzu lose in einem Freiraum innerhalb der Rückführbleche angeordnet. Leerräume innerhalb des Gehäuses können optional mit einem Kunststoffschaum gefüllt werden.

Aus US 2012/0247225 A1 ist ein ähnlicher Fluidzähler mit einer Verschalung bekannt. Dieser weist einen Messabschnitt mit mehreren Messwertgebern auf, die über Kabel mit einer in einem Gehäuse aufgenommenen Steuerungseinrichtung verbunden sind, wobei das Gehäuse auf einem Zählergehäuse des Fluidzählers aufsitzt. Das Zählergehäuse bildet einen den Messabschnitt, die Messwertgeber sowie die Kabel beinhaltenden Innenraum, wobei die Kabel über eine Öffnung des Zählergehäuses nach außen geführt sind.

Aus DE 10 2005 009 675 B3 ist ein Durchflussgerät mit einem Messrohr aus Kunststoff bekannt, das abschnittsweise in einem der magnetischen sowie elektrischen Abschirmung dienenden Außengehäuse aufgenommen ist. In der Wand des Messrohres sind eingeschmolzene Elektroden zur Messwertbestimmung angeordnet, die mit Kabeln 14 verbunden sind. Die Kabel 14 verlaufen innerhalb des Gehäuses und werden über eine Gehäuseöffnung nach außen geführt. Optional kann der freie Raum innerhalb des Gehäuses mit einem Gießmaterial ausgefüllt werden.

Der Erfindung liegt damit das Problem zugrunde, eine Messeinrichtung anzugeben, die demgegenüber verbessert ist.

Zur Lösung dieses Problems ist bei einer Messeinrichtung der eingangs genannten Art erfindungsgemäß vorgesehen, dass das Messrohr zumindest abschnittsweise mit einer zumindest abschnittsweise formschlüssig an die oder mit einem definierten Spalt zur Au-ßenseite des Messrohrs angelegten, thermisch isolierenden Verschalung, in der die eine oder die mehreren Kabelverbindungen in einem oder mehreren, innenseitig an der Verschaltung ausgebildeten, Kanälen aufgenommen sind, eingehaust ist.

Erfindungsgemäß ist eine spezifische - vollständig außerhalb des Messrohrs angeordnete - Verschalung vorgesehen, die das Messrohr zumindest abschnittsweise einhaust und formschlüssig an der Außenseite des Messrohrs anliegt oder mit einem definierten schmalen Spalt zur Außenseite positioniert ist. An der Innenseite dieser Verschalung sind ein oder mehrere Kanäle ausgebildet, in dem oder denen die Kabelverbindungen geführt sind, das heißt, sie sind nicht freihängend innerhalb eines Gehäuses angeordnet, sondern sind definiert geführt und in den Kanälen entsprechend fixiert. Hierüber wird ein sehr guter mechanischer Schutz der Kabelverbindungen mit einem Schutzbauteil, nämlich der Verschalung realisiert, wobei die Verschalung, da an der Messrohraußenseite formschlüssig anliegend, auch ein sehr kompaktes Gehäuse bildet.

Die Verschalung ist zusätzlich thermisch isolierend, also mit einer hinreichenden Wandstärke ausgeführt ist, so dass sich eine Isolationsverschalung ergibt. Eine solche thermische Isolation ist sehr vorteilhaft, da sie insbesondere bei hohen Temperaturdifferenzen zwischen der Mediumstemperatur und der Umgebungstemperatur und niedrigen Durchflüssen die freie Konvektion innerhalb des Mediums mindert. Hierdurch sind stabilere Messungen und eine höhere Messdynamik möglich. Temperaturfühler, die die Temperatur des Mediums direkt im Medium oder indirekt über die Wandungstemperatur des Messrohrs messen, liefern durch die verringerte Wärmeableitung eine stabilere und genauere Messung. Auch wird durch die thermische Isolation verhindert, dass Änderungen der Umgebungstemperatur insbesondere bei ruhendem Medium zum Ausgasen des Mediums und dadurch zu Blasen führen, die Messfehler verursachen können. Schließlich wird durch die thermisch isolierende Verschalung eine Erwärmung des ruhenden Mediums durch hohe Außentemperaturen, die ein Bakterienwachstum begünstigen kann, vermindert bzw. gänzlich verhindert.

Neben der thermischen Isolierung ist auch die formschlüssige Anlage der Verschalung sehr vorteilhaft. Denn hierdurch wird, beispielsweise bei einer als Klimazähler ausgeführten Messeinrichtung die Bildung von Kondenswasser am Messrohr verhindert, womit einer etwaigen Korrosion vorgebeugt wird.

Bevorzugt ist die Verschalung als Kunststoffverschalung ausgeführt. Eine solche Verschalung ist besonders einfach herstellbar, sie weist von Haus aus gute thermische Isolationseigenschaften auf, wenn sie eine hinreichende Wandstärke aufweist.

Um der Kunststoffverschalung besonders gute thermisch isolierende Eigenschaften zu verleihen ist es bevorzugt, wenn die Kunststoffverschalung aus einem geschäumten Kunststoffmaterial ist. Beispielsweise wird als Kunststoff Polyurethan verwendet, das heißt, dass die Kunststoffverschalung entweder gänzlich oder zumindest teilweise an ihrer Innenseite aus ihrem Polyurethan-Hartschaum ist. Mit einem solchen geschäumten Kunststoffmaterial können auch entsprechend dickerwandige Verschalungen gebildet wird, was auch zur mechanischen Stabilisierung der Verschalung beiträgt. Alternativ kann als Kunststoff auch Polystyrol (PS), Polyethylen (PE) oder Polypropylen (PP) oder ein Kunststoffregenerat, ungeschäumt oder geschäumt, verwendet werden.

Alternativ kann die Verschalung auch aus einem metallenen Schaum, einem mineralischen Schaum oder einem Wollmaterial wie Stein- oder Glaswolle, oder aus Zellulose sein.

Gemäß einer ersten Erfindungsalternative kann die Verschalung mit dem Messrohr oberseitig bündig abschließen und, gegebenenfalls mit dem Messrohr, eine Montageebene für die darauf angeordnete Steuerungs- und/oder Verarbeitungseinrichtung bilden. Die Verschalung haust also das Messrohr nahezu vollständig ein und schließt oberseitig bündig ab. Diese Oberseite ist derart ausgebildet, dass sich eine ebene Fläche bildet, auf die die Steuerungs- und/oder Verarbeitungseinrichtung aufgesetzt werden kann. Der Verschalung kommt also die zusätzliche Funktion eines der Montage der Steuerungs- und/oder Verarbeitungseinrichtung dienenden Montagebauteils zu. Diese Funktion kann die Verschalung auch erfüllen, wenn, wie alternativ zur vorbeschriebenen Ausgestaltung der Fall, die Verschalung das Messrohr komplett einhaust und eine Montageebene für die darauf angeordnete Steuerungs- und/oder Verarbeitungseinrichtung bildet. Auch hier weist die Verschalung eine entsprechende Fläche auf, auf die die Elektronik gesetzt werden kann.

Gemäß einer ersten Realisierungsalternative kann die Verschalung mehrteilig sein, wobei die Teile miteinander über daran ausgebildete Verbindungsmittel oder separate Verbindungsmittel miteinander verbunden sind. Die Verschalung besteht also beispielsweise aus zwei Teilen respektive Halbschalen, die, das Messrohr einhausend, aneinander gesetzt und miteinander verbunden werden. Diese Verbindung kann über unmittelbar an den Teilschalen ausgebildete Verbindungsmittel, vorzugsweise Klemm- oder Rastmittel, erfolgen. Hier werden also die beiden Schalenhälften einfach aneinander gesetzt und über die dann interagierenden Klemm- oder Rastmittel aneinander fixiert. Alternativ kann die Verbindung auch über separate Verbindungselemente, vorzugsweise entsprechende Verbindungsschrauben, erfolgen, wozu entsprechende Schraubenaufnahmen respektive Durchbrechungen oder Augen, die von den Schrauben durchsetzt werden, vorgesehen sind. In diesen Durchbrechungen können beispielsweise Innengewindehülsen eingesetzt sein oder dergleichen, wie die Verbindungsschrauben natürlich auch über entsprechende Muttern gekontert sein können.

Alternativ zur mehrteiligen Ausführung kann die Kunststoffverschalung auch einteilig sein und beispielsweise in Form eines geschlitzten Ringes oder mit einer Ω-Form ausgeführt werden. Sie kann, da in jedem Fall geschlitzt respektive offen etwas aufgebogen und über das Messrohr gestülpt werden. Auch bei dieser Ausgestaltung kann eine entsprechende Montageebene für die Elektronik realisiert werden.

Insbesondere wenn die Verschalung als Träger der Steuerungs- und/oder Verarbeitungseinrichtung dient, mithin also diese auf der Montageebene auf der Verschalung aufsetzt, kann die Verschalung über Verbindungselemente direkt mit der Steuerungs- und/oder Verarbeitungseinrichtung verbunden werden. Das heißt, beide werden aneinander fixiert respektive die Elektronik an der Verschalung befestigt. Diese Verbindungselemente sind bevorzugt Schrauben, die die Verschalung in vorgefertigten Durchbrechungen durchsetzen, wobei zu Stabilitätszwecken in die Durchbrechungen stabile Hülsen, beispielsweise Kunststoffhülsen oder Metallhülsen, eingesetzt sind. Hierüber wird vermieden, insbesondere bei Ausbilden der Verschalung bzw. der Teilschalen aus einem geschäumten Material, dass beim Verschrauben das Isolationsmaterial gequetscht wird. Bevorzugt werden diese Schrauben über vertikal verlaufende Durchbrechungen von unten in die Steuerungs- und/oder Verarbeitungseinrichtung geführt. Dort können sie beispielsweise in dort vorgesehene Gewindebohrungen eingeschraubt werden oder mit Muttern fixiert werden. Die Steuerungs- und/oder Verarbeitungseinrichtung, z. B. die Elektronik, weist ein entsprechendes Gehäuse auf, mit dem sie auf der Verschalung sitzt, und in das die Schrauben geführt sind.

Alternativ zur mehrteiligen Ausführung der Kunststoffverschalung kann vorgesehen sein, dass die Kunststoffverschalung direkt an das Messrohr angeschäumt ist. Gemäß dieser Erfindungsalternative wird das Messrohr zumindest teilweise, gegebenenfalls auch vollständig nachträglich umschäumt oder die Kunststoffverschalung wird, wenn kein Schaumbauteil gebildet wird, angespritzt oder angeformt. Der Zähler respektive das Messrohr oder der Messrohrabschnitt bildet somit ein Einlegeteil in einem Spritz- oder Schäumprozess. Die Außenkontur der hierdurch gebildeten Kunststoffverschalung wird durch das Spritz- oder Schäumwerkzeug gebildet. Hierdurch lässt sich eine sehr hohe Manipulationssicherheit gewährleisten, da das Kunststoffmaterial stoffschlüssig und damit unlösbar mit dem Messrohr verbunden ist. Eine Feuchtekondensation kann durch das komplette Fehlen von Spalten zwischen dem Messrohr und der Kunststoffverschalung vermieden werden.

Die Verschalung kann aus einer härteren Außenschale und einer innenseitig angeschäumten Innenschale bestehen. Ein solcher zweischichtiger Aufbau ist bei allen beschriebenen Schalenausgestaltungen denkbar. Im Falle einer mehrteiligen Kunststoffverschalung können als Außenschalenteile Spritz- oder Tiefziehteile verwendet werden, die entsprechend innenseitig hinterschäumt werden. Die vorgesehenen Rast- oder Klemmmittel können beispielsweise an den steiferen bzw. stabileren Außenschaltenteilen vorgesehen sein. Bei einer einteiligen Ausgestaltung der Kunststoffverschalung wird ein einteiliges Spritz- oder Tiefziehteil als Außenschale verwendet, das in eine entsprechende Schraubenform eingelegt wird, wo es innenseitig ausgeschäumt wird. Bei einem direkten Anschäumen der Kunststoffverschalung an das Messrohr kann in einem ersten Schritt in einer ersten Form die Schaumschicht direkt an das Messrohr angeformt werden. Sodann kann die Messeinrichtung in eine zweite Form gebracht werden respektive die Form entsprechend geändert werden, um die härtere Außenschale um die angeschäumte Innenschale zu spritzen oder zu gießen. Anstelle einer aus Kunststoff bestehenden härteren Teilschale kann auch eine metallene Teilschale verwendet werden.

Der Vorteil eines solchen Schalungsaufbaus ist in der großen Stabilität der Verschalung resultierend aus der harten Außenschale, verbunden mit den hervorragenden thermischen Isolationseigenschaften resultierend aus der geschäumten Innenschale zu sehen.

In der Verschalung können des Weiteren ein oder mehrere Lüftungsöffnungen, die insbesondere zur Montageebene führen, vorgesehen sein. Über diese Lüftungsöffnungen, die sich kanalartig durch die Verschalung ziehen, kann Luft zirkulieren, was für eine Kühlung der Steuerungs- und/oder Verarbeitungseinrichtung zweckmäßig ist.

Schließlich kann an der aus einem thermoplastischen Material bestehenden Kunststoffverschalung wenigstens eine durch lokales Aufschmelzen erzeugte Plombierung vorgesehen sein. Alternativ kann in oder an die Kunststoffverschalung ein Plombierungselement ein- oder angeformt werden, z. B. in Form eines Bandes, eines Fadens, einer Folie etc. Die Schmelzplombierung oder das Plombierungselement reißt bei einem Öffnen der Kunststoffverschalung, so dass bei einer Wartung oder einer Ablesung überprüft werden kann, ob die Verschalung zwischenzeitlich unbefugt geöffnet wurde oder nicht.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Explosionsansicht einer erfindungsgemäßen Messeinrichtung nebst Verschalung,
- Fig. 2: eine Perspektivansicht der Messeinrichtung nebst Steuerungs- und/oder Verarbeitungseinrichtung, jedoch ohne Verschalung,
- Fig. 3: die Ansicht gemäß Fig. 2 mit Verschalung,
- Fig. 4: ein Längsschnitt der Messeinrichtung aus Fig. 3,
- Fig. 5: eine Querschnittsansicht durch eine zweite Ausführungsform einer erfindungsgemäßen Messeinrichtung, in Form einer Prinzipdarstellung,
- Fig. 6: eine Prinzipdarstellung einer Schnittansicht einer Messeinrichtung einer dritten Ausführungsform, und
- Fig. 7: eine Prinzipdarstellung einer Messeinrichtung einer vierten Ausführungsform im Querschnitt.

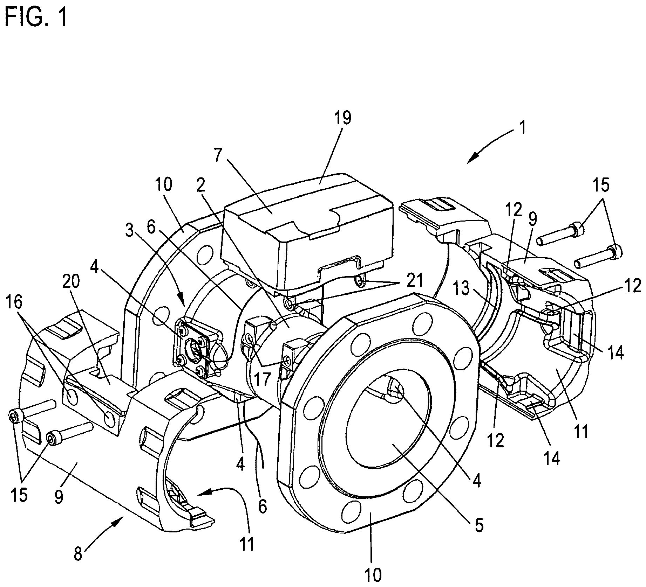

Fig. 1 zeigt in einer Explosionsdarstellung eine erfindungsgemäße Messeinrichtung 1, die der Erfassung wenigstens eines Messwerts eines fluiden Mediums dient. Sie umfasst ein Messrohr 2 mit einer daran angeordneten Messvorrichtung 3, die im gezeigten Beispiel aus vier Ultraschallmesssensoren 4 besteht, die in 90°-Anordnung am Messrohr 2 positioniert sind und Messwerte in Bezug auf das im Inneren 5 des Messrohres 2 strömenden Fluids, beispielsweise Wasser, aufnehmen. Jeweils zwei um 180° versetzt angeordnete Messsensoren 4 bilden ein Sensorpaar, wobei der eine Messsensor 4 am vorderen und der andere Messsensor 4 am hinteren Rohrende angeordnet ist. Exemplarisch sei diesbezüglich auf die folgenden Figuren verwiesen.

Die Messsensoren 4 sind über hier nur symbolisch gezeigte Kabelverbindungen 6 mit einer Steuerungs- und/oder Verarbeitungseinrichtung 7 zu verbinden, die die aufgenommenen Sensorwerte erfasst, verarbeitet und das entsprechende Messergebnis an einer nicht näher gezeigten Anzeigevorrichtung ausgibt. Der grundsätzliche Aufbau einer solchen Messeinrichtung ist bekannt.

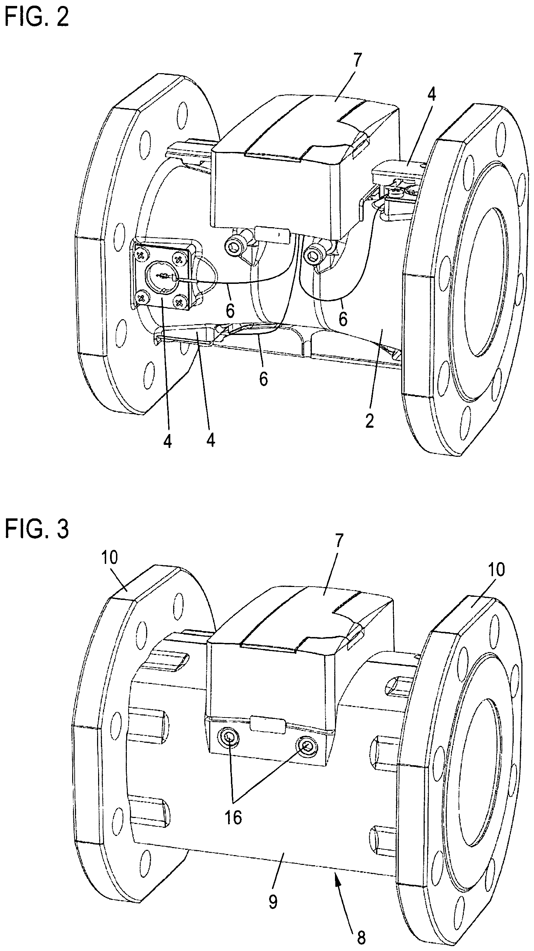

Die erfindungsgemäße Messeinrichtung 1 umfasst im gezeigten Beispiel des Weiteren eine - außerhalb des Messrohrs angeordnete und nicht ins Innere des Messrohrs eingreifende - thermisch isolierende Verschalung 8, die aus zwei Verschalungshälften 9 besteht, die, siehe Fig. 3, das Messrohr 2, an dem wie die Figuren zeigen am vorderen und hinteren Ende zwei Rohrflansche 10 angeordnet sind, vollständig umgreift, so dass das Messrohr 2 thermisch isoliert ist. Die Verschalung 8 respektive die Schalungshälften 9 sind bevorzugt aus Kunststoff, besonders bevorzugt aus einem geschäumten Kunststoffmaterial. Alternativ kann auch ein mineralischer oder ein metallener Schaum oder ein Wollmaterial wie Stein- oder Glaswolle oder Zellulose als Verschalungsmaterial verwendet werden.

An ihren Innenseiten 11 sind die beiden Schalenhälften 9 spiegelbildlich ausgeführt, so dass sie ohne weiteres an beiden Seiten verbaut werden können.

Die Verschalung 8 respektive die Schalenhälften 9 sind so ausgelegt, dass die Innenseiten 11 soweit als möglich vollflächig auf der Außenwandung des Messrohres aufliegen, mithin also in Kontakt mit dem Messrohr 2 stehen. Hierüber wird eine sehr gute thermische Isolation des Zählers erreicht, wie auch vermieden wird, dass sich im Zwischenraum zwischen Messrohr 2 und Verschalung 8 Feuchtigkeit ansammeln kann und ähnliches.

Wie beschrieben laufen von den Messsensoren 4 freilaufende Kabelverbindungen 6 zur Steuerungseinrichtung 7. An den Innenseiten 11 beider Schalenhälften 9 sind separate Kanäle 12 ausgebildet, in denen in der Montagestellung die Kabelverbindungen 6 aufgenommen und geführt sind. An jeder Schalenhälfte 9 ist ein Kanal 12 im Wesentlichen mittig vorgesehen, in welchem die Leitungsverbindungen der an den Seiten des Messrohrs 2 angeordneten Messsensoren laufen. An den Rändern sind jeweils halbe Kanäle 12 ausgebildet, die sich zu einem gesamten Kanal ergänzen, wenn die Schalenhälften 9 zusammengesetzt sind. In diesen in der Montagestellung gebildeten Kanälen 12 laufen die Kabelverbindungen 6 der beiden oben und unten am Messrohr 2 angeordneten Messsensoren 4. Alle Kanäle 12 münden in einen umlaufenden Kanal 13, der zur Steuerungs- und/oder Verarbeitungseinrichtung 7 führt, wo die Kabelverbindungen 6 aus dem Kanal 13 heraustreten und in die Steuerungs- oder Verarbeitungseinrichtung 7 geführt respektive an ihr kontaktiert sind. Über die Kanäle 12, 13 ist eine Kabelführung realisiert, diese hängen also nicht mehr frei im Raum, sondern sind auf der definierten Bahnen geführt, wie gleichzeitig auch eine thermische Isolierung des Messrohrs 2 gegeben ist.

Die Kanäle 12 gehen von entsprechenden Taschen 14 ab, die an der Innenseite 11 jeder Verschalungshälfte 9 gebildet sind. Die Taschen 14 nehmen jeweils einen Messsensor 4 auf, wobei, ähnlich wie bei den oberen und unteren Kanälen, die oberen und unteren halben Taschen 14 einander ergänzen, so dass sich jeweils eine Gesamttasche 14 ergibt, in der der obere und untere Messsensor 4 aufgenommen ist.

Zur Verbindung der Schalenhälften 9 dienen Verbindungsschrauben 15, die durch entsprechende Bohrungen 16 in den Schalenhälften 9 geführt sind und die in entsprechende Gewindebohrungen 17 an dem Messrohr 2, die in geeigneten Radialvorsprüngen ausgebildet sind, eingeschraubt werden. Zur Stabilisierung können in den Bohrungen 16 der Schalenhälften 9 Kunststoff- oder Metallhülsen eingeformt sein. An den einander zugewandten Kanten der Schalenhälften 9 können entsprechende ineinandergreifende Geometrien ausgebildet sein, so dass sich dort eine Art Formschluss ergibt, wie dort auch entsprechende Rast- oder Schnappelemente ausgebildet sein können, über die die Schalenhälften 9 zusätzlich verrastet werden können.

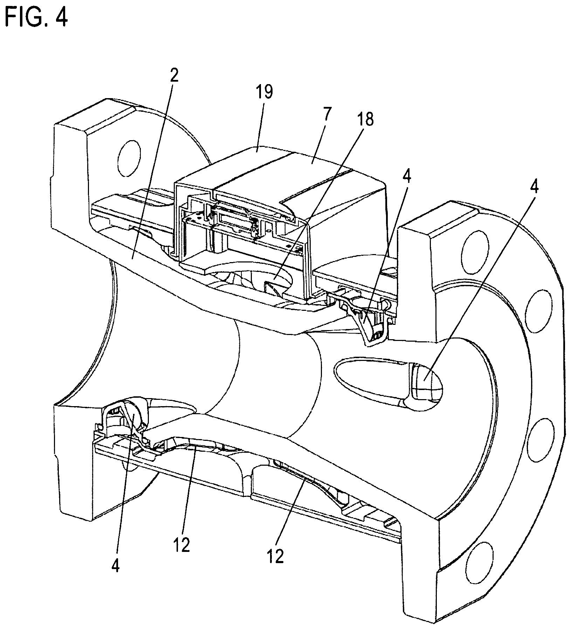

In der in Fig. 4 gezeigten Längsschnittansicht ist eine Durchbrechung 18 im Boden des Gehäuses 19 der Steuerungs- und/oder Verarbeitungseinrichtung 7 gezeigt, durch welche Durchbrechung 18 die Kabelverbindungen 6 zu der extern angebrachten Steuerungs- und/oder Verarbeitungseinrichtung 7 (z. B. abnehmbares Zählermodul, externes Funkmodul, Datensammler) laufen.

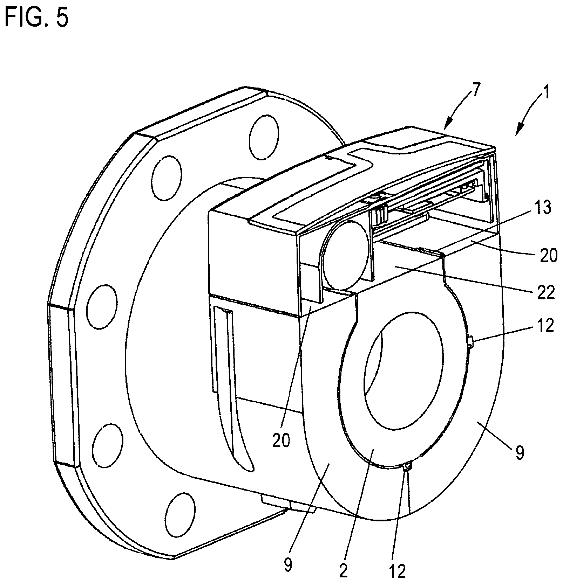

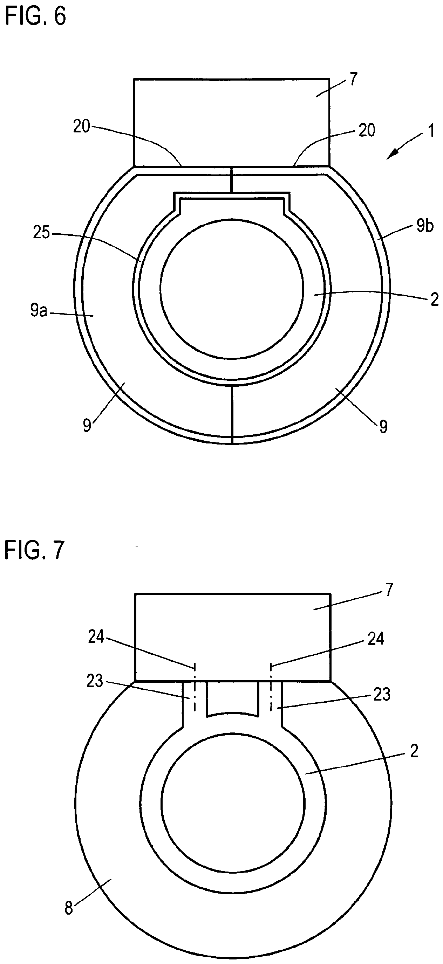

Wie Fig. 1 zu entnehmen ist, weist jede Schalenhälfte 9 im mittleren Bereich eine Art Plateau 20 auf. Diese beiden Plateaus liegen in der Montagestellung einander gegenüber und bilden eine Montageebene für die Steuerungs- und/oder Verarbeitungseinrichtung 7, wie sie exemplarisch bei der Ausgestaltung gemäß Fig. 5 gezeigt ist. Das heißt, die Steuerungs- und/oder Verarbeitungseinrichtung 7 sitzt auf diesen Plateaus 20 respektive der darüber gebildeten Montageebene auf. Die Befestigung der Steuerungs- und/oder Verarbeitungseinrichtung 7 erfolgt bei dem Beispiel gemäß Fig. 6 über die Verbindungsschrauben 15, die entsprechende Bohrungen 21 an nach unten vorspringenden Laschen des Gehäuses 19 der Steuerungs- und/oder Verarbeitungseinrichtung 7 durchgreifen.

Fig. 5 zeigt ein weiteres Ausführungsbeispiel einer Messeinrichtung 1, wobei für gleiche Bauteile gleiche Bezugszeichen verwendet werden. Gezeigt ist wieder das Messrohr 2, das hier jedoch oberseitig eine Verlängerung mit einer ebenen Fläche 22 aufweist. An dieser ebenen Fläche 22 schließen im gezeigten Beispiel die Plateaus 20 der beiden Schalenhälften 9 an, so dass sich eine quasi mehrteilige Montageebene bildet. Gezeigt sind hier wiederum die Kanäle 12 und 13, in denen die Kabelverbindungen 6 laufen.

Fig. 6 zeigt ein weiteres Ausführungsbeispiel einer erfindungsgemäßen Messeinrichtung 1, wobei wiederum für gleiche Bauteile gleiche Bezugszeichen verwendet werden. Das Messrohr 2 weist auch hier einen längslaufenden Vorsprung auf, jedoch bildet dieser in diesem Fall nicht die Montageebene. Die beiden Schalenhälften 9 umgreifen auch diesen Vorsprung und sind in ihrer Form entsprechend ausgebildet, so dass ihre Plateaus 20 einander ergänzen und die Montageebene für die Steuerungs- und/oder Verarbeitungseinrichtung 7 bilden. Bei dieser Erfindungsausgestaltung besteht jede Schalenhälfte 9 aus zwei unterschiedlichen Abschnitten, nämlich aus einer Innenschale 9a und einer Außenschale 9b, wobei die Innenschale 9a aus einem weicheren Schaum besteht als die dünnwandige Außenschale 9b, oder umgekehrt. Das heißt, dass jede Schalenhälfte 9 folglich einerseits aus einem stabilen Schalenteil, nämlich dem härteren Kunststoffteil, und zum anderen aus dem die gute thermische Isolierung bildenden, weicheren Schalenteil besteht. Das aus dem weicheren Schaum gebildete Schaltenteil ist vorzugsweise an das härtere Schalenteil in einer Gieß- oder Spritzform direkt angeformt. Die Schalenhälften sind in der Montagestellung mittels geeigneter Abstandshalter (nicht gezeigt) über den schmalen Spalt 25 von dem Messrohr 2 definiert beabstandet.

Fig. 7 zeigt schließlich eine Ausführungsform, bei der- vergleichbar mit der aus Fig. 1 - am Messrohr 2 entsprechende Vorsprünge 23 ausgebildet sind, die entsprechende Gewindebohrungen aufweisen, in die, wie durch die Striche dargestellt, Befestigungsschrauben 24 für die Fixierung der Steuerungs- und/oder Verarbeitungseinrichtung 7 eingeschraubt werden. Die Verschalung 8 ist hier einteilig ausgeführt und ist direkt an das Messrohr 2 angespritzt. Bevorzugt handelt es sich um einen geschäumten Kunststoff, der die Verschalung bildet. Die Kanäle werden beim Spritzen ausgebildet, indem das Material die an der Messrohrwandung längslaufende Kabelverbindungen 6 einschließt, so dass jede eingespritzte Kabelverbindung 6 ihren eigenen Kanal bildet und definiert.

Wie beschrieben ist die Kunststoffverschalung bevorzugt aus Kunststoff. Bevorzugt wird hierzu ein (plastisches, schäumbares) Material verwendet, wie beispielsweise PU-Hartschaum, der in beliebige Wanddicken verarbeitet werden kann. Auch andere Materialien wie PS, PE oder PP oder ein z.B. aus entsprechendem Gemisch gebildetes Granulat und dergleichen können in ihrer normalen Form oder in geschäumter Form verwendet werden.

Das verwendete Kunststoffmaterial kann farbig sein, das heißt, dass letztlich eine beliebige Farbauswahl getroffen werden kann. Natürlich besteht auch die Möglichkeit, bei Bedarf die Verschalung 8 zu lackieren oder ähnliches.

### Bezugszeichenliste

1 Messeinrichtung
2 Messrohr
3 Messvorrichtung
4 Ultraschallmesssensor
5 Innere
6 Kabelverbindung
7 Verarbeitungseinrichtung
8 Verschalung
9 Verschaltungshälfte
10 Rohrflansch
11 Innenseite
12 Kanal
13 Kanal
14 Tasche
15 Verbindungsschraube
16 Bohrung
17 Gewindebohrung
18 Durchbrechung
19 Gehäuse
20 Plateau
21 Bohrung
22 Fläche
23 Vorsprung
24 Befestigungsschraube
25 Spalt

## Patentansprüche

1. Messeinrichtung zum Erfassen wenigstens eines Messwerts eines fluiden Mediums, umfassend ein Messrohr mit einer daran und/oder darin angeordneten Messvorrichtung sowie eine außerhalb des Messrohrs angeordnete Steuerungs- und/oder Verarbeitungseinrichtung, wobei die Messvorrichtung mit der Steuerungs- und/oder Verarbeitungseinrichtung über eine oder mehrere Kabelverbindungen, die außerhalb des Messrohrs zur Steuerungs- und/oder Verarbeitungseinrichtung laufen, verbunden ist, wobei dass das Messrohr (2) zumindest abschnittsweise mit einer zumindest abschnittsweise formschlüssig an die oder mit einem definierten Spalt (25) zu der Außenseite des Messrohrs angelegten, thermisch isolierenden Verschalung (8) eingehaust ist, **dadurch gekennzeichnet, dass** in der Verschalung (8) die eine oder die mehreren Kabelverbindungen (6) in einem oder mehreren, innenseitig an der Verschalung (8) ausgebildeten, Kanälen (12, 13) aufgenommen sind.

2. Messeinrichtung nach Anspruch 1, **dadurch gekennzeichnet, dass** die Verschalung (8) eine Kunststoffverschalung ist.

3. Messeinrichtung nach Anspruch 1 oder 2, **dadurch gekennzeichnet, dass** die Verschalung (8) aus einem geschäumten Material, insbesondere einem geschäumten Kunststoff, einem mineralischen oder metallenen Schaum, oder einem Wollmaterial, insbesondere Stein- oder Glaswolle oder Zellulose ist.

4. Messeinrichtung nach einem der vorangehenden Ansprüche, **dadurch gekennzeichnet, dass** die Verschalung (8) mit dem Messrohr (2) oberseitig bündig abschließt und, gegebenenfalls mit dem Messrohr (2), eine Montagebene für die darauf angeordnete Steuerungs- und/oder Verarbeitungseinrichtung (7) bildet.

5. Messeinrichtung nach einem der Ansprüche 1 bis 3, **dadurch gekennzeichnet, dass** die Verschalung (8) das Messrohr komplett einhaust und eine Montageebene für die darauf angeordnete Steuerungs- und/oder Verarbeitungseinrichtung (7) bildet.

6. Messeinrichtung nach einem der vorangehenden Ansprüche, **dadurch gekennzeichnet, dass** die Verschalung (8) mehrteilig ist, wobei die Teile (9) miteinander über daran ausgebildete Verbindungsmittel oder separate Verbindungselemente (15) miteinander verbunden sind.

7. Messeinrichtung nach Anspruch 6, **dadurch gekennzeichnet, dass** die Verbindungsmittel Klemm- oder Rastmittel sind.

8. Messeinrichtung nach einem der vorangehenden Ansprüche, **dadurch gekennzeichnet, dass** die Verschalung (8) über die Verbindungselemente (15) mit der Steuerungs- und/oder Verarbeitungseinrichtung (7) verbunden ist.

9. Messreinrichtung nach Anspruch 8, **dadurch gekennzeichnet, dass** die Verbindungselemente Schrauben (15) sind, die die Verschalung (8) in vorgefertigten Durchbrechungen (16) durchsetzen.

10. Messeinrichtung nach Anspruch 9, **dadurch gekennzeichnet, dass** in die Durchbrechungen (16) stabile Hülsen eingesetzt sind.

11. Messeinrichtung nach Anspruch 9 oder 10, **dadurch gekennzeichnet, dass** die Schrauben (15) in an der Steuerungs- und/oder Verarbeitungseinrichtung (7) vorgesehene Gewindebohrungen eingeschraubt oder mit Muttern an der Steuerungs- und/oder Verarbeitungseinrichtung (7) festgelegt sind.

12. Messeinrichtung nach einem der Anspruche 1 bis 5, **dadurch gekennzeichnet, dass** die Verschalung (8) aus einem Kunststoff- oder Schaummaterial direkt an das Messrohr (2) angespritzt oder angeschäumt ist.

13. Messeinrichtung nach einem der Ansprüche 1 bis 5, **dadurch gekennzeichnet, dass** die Verschalung (8) einteilig und längsgeschlitzt ist.

14. Messeinrichtung nach einem der vorangehenden Ansprüche, **dadurch gekennzeichnet, dass** die Verschalung (8) aus einer härteren Außenschale und einer innenseitig angeschäumten oder eingelegten geschäumten Innenschale besteht.

15. Messeinrichtung nach einem der vorangehenden Ansprüche, **dadurch gekennzeichnet, dass** in der Verschalung (8) ein oder mehrere Lüftungsöffnungen, die insbesondere zur Montageebene führen, vorgesehen sind.

16. Messeinrichtung nach einem der vorangehenden Ansprüche, **dadurch gekennzeichnet, dass** an der aus einem thermoplastischen Kunststoffmaterial bestehenden Verschalung (8) wenigstens eine durch lokales Aufschmelzen erzeugte Plombierung vorgesehen ist, oder dass in oder an die Verschalung ein Plombierungselement ein- oder angeformt ist.

17. Messeinrichtung nach einem der vorangehenden Ansprüche, **dadurch gekennzeichnet, dass** die Verschalung (8) aus einem thermoplastischen, insbesondere schäumbaren Material ist.

18. Messeinrichtung nach Anspruch 17, **dadurch gekennzeichnet, dass** das Material Polyurethan (PU), Polysterol (PS), Polyethylen (PE) oder Polypropylen (PP) oder ein Kunststoffregenerat ist, das ungeschäumt oder geschäumt ist.

## Claims

1. Measuring device for the detection of at least one measured value of a fluid medium, comprising a measuring tube with a measuring apparatus which is arranged on and/or in the former, and a control and/or processing device which is arranged outside the measuring tube, the measuring apparatus being connected to the control and/or processing device via one or more cable connections which runs/run outside the measuring tube to the control and/or processing device, the measuring tube (2) being enclosed at least in sections with a thermally insulating casing (8) which is applied at least in sections in a positively locking manner to, or with a defined gap (25) from, the outer side of the measuring tube, **characterized in that** the one or more cable connections (6) is/are received in the casing (8) in one or more ducts (12, 13) configured on the inner side of the casing (8).

2. Measuring device according to Claim 1, **characterized in that** the casing (8) is a plastic casing.

3. Measuring device according to Claim 1 or 2, **characterized in that** the casing (8) is made from a foamed material, in particular a foamed plastic, a mineral or metallic foam, or a wool material, in particular rock wool or glass wool or cellulose.

4. Measuring device according to one of the preceding claims, **characterized in that** the casing (8) terminates flush on the upper side with the measuring tube (2), and, possibly with the measuring tube (2), forms an assembly level for the control and/or processing device (7) which is arranged on it.

5. Measuring device according to one of Claims 1 to 3, **characterized in that** the casing (8) encloses the measuring tube completely and forms an assembly level for the control and/or processing device (7) which is arranged on it.

6. Measuring device according to one of the preceding claims, **characterized in that** the casing (8) is in multiple pieces, the parts (9) being connected to one another via connecting means which are configured on it or separate connecting elements (15).

7. Measuring device according to Claim 6, **characterized in that** the connecting means are clamping or latching means.

8. Measuring device according to one of the preceding claims, **characterized in that** the casing (8) is connected via the connecting elements (15) to the control and/or processing device (7).

9. Measuring device according to Claim 8, **characterized in that** the connecting elements are screws (15) which penetrate the casing (8) in prefabricated apertures (16).

10. Measuring device according to Claim 9, **characterized in that** stable sleeves are inserted into the apertures (16) .

11. Measuring device according to Claim 9 or 10, **characterized in that** the screws (15) are screwed into threaded bores which are provided on the control and/or processing device (7), or are fixed by way of nuts on the control and/or processing device (7).

12. Measuring device according to one of Claims 1 to 5, **characterized in that** the casing (8) made from a plastic or foam material is injection-moulded or foamed directly onto the measuring tube (2).

13. Measuring device according to one of Claims 1 to 5, **characterized in that** the casing (8) is in one piece and is longitudinally slotted.

14. Measuring device according to one of the preceding claims, **characterized in that** the casing (8) consists of a relatively hard outer shell and a foamed inner shell which is foamed or inserted onto the inner side.

15. Measuring device according to one of the preceding claims, **characterized in that** one or more ventilation openings which leads/lead, in particular, to the assembly level is/are provided in the casing (8).

16. Measuring device according to one of the preceding claims, **characterized in that** at least one sealing means which is generated by way of local melting is provided on the casing (8) which consists of a thermoplastic material, or **in that** a sealing element is integrally formed into or onto the casing.

17. Measuring device according to one of the preceding claims, **characterized in that** the casing (8) is made from a thermoplastic, in particular foamable, material.

18. Measuring device according to Claim 17, **characterized in that** the material is polyurethane (PU), polystyrene (PS), polyethylene (PE) or polypropylene (PP) or a regenerated plastic which is unfoamed or foamed.

## Revendications

1. Moyen de mesure destiné à acquérir au moins une valeur de mesure d'un milieu fluide, le moyen de mesure comprenant un tube de mesure pourvu d'un dispositif de mesure disposé sur et/ou dans celui-ci et un moyen de commande et/ou de traitement disposé à l'extérieur du tube de mesure, le dispositif de mesure étant relié au moyen de commande et/ou de traitement par le biais d'une ou plusieurs liaisons par câbles qui s'étendent à l'extérieur du tube de mesure vers le moyen de commande et/ou de traitement, le tube de mesure (2) comportant au moins par portions une coque (8) thermiquement isolante qui est placée au moins par portions, par complémentarité de formes, sur le côté extérieur du tube de mesure ou avec un espace défini (25) par rapport à celui-ci, **caractérisé en ce que** les une ou plusieurs liaisons par câbles (6) sont reçues dans la coque (8), dans un ou plusieurs canaux (12, 13) ménagés du côté intérieur de la coque (8).

2. Moyen de mesure selon la revendication 1, **caractérisé en ce que** la coque (8) est une coque en matière synthétique.

3. Moyen de mesure selon la revendication 1 ou 2, **caractérisé en ce que** la coque (8) est réalisée à partir d'un matériau expansé, notamment une matière synthétique expansée, une mousse minérale ou métallique, ou un matériau en laine, en particulier de la laine de roche ou de verre ou de la cellulose.

4. Moyen de mesure selon l'une des revendications précédentes, **caractérisé en ce que** la coque (8) se termine au ras du tube de mesure (2) du côté supérieur et forme, éventuellement avec le tube de mesure (2), un plan de montage destiné au moyen de commande et/ou de traitement (7) disposé sur celui-ci.

5. Moyen de mesure selon l'une des revendications 1 à 3, **caractérisé en ce que** la coque (8) loge complètement le tube de mesure et forme un plan de montage destiné au moyen de commande et/ou de traitement (7) disposé sur celui-ci.

6. Moyen de mesure selon l'une des revendications précédentes, **caractérisé en ce que** la coque (8) est en plusieurs parties, les parties (9) étant reliées les unes aux autres par le biais d'organes de liaison ou d'éléments de liaison séparés (15) formés sur celles-ci.

7. Moyen de mesure selon la revendication 6, **caractérisé en ce que** les organes de liaison sont des organes de serrage ou d'encliquetage.

8. Moyen de mesure selon l'une des revendications précédentes, **caractérisé en ce que** la coque (8) est reliée au moyen de commande et/ou de traitement (7) par le biais des éléments de liaison (15).

9. Moyen de mesure selon la revendication 8, **caractérisé en ce que** les éléments de liaison sont des vis (15) qui pénètrent dans la coque (8) dans des passages (16) ménagés à l'avance.

10. Moyen de mesure selon la revendication 9, **caractérisé en ce que** des manchons stables sont insérés dans les passages (16).

11. Moyen de mesure selon la revendication 9 ou 10, **caractérisé en ce que** les vis (15) sont vissées dans des alésages filetés prévus sur le moyen de commande et/ou de traitement (7) ou sont fixées par des écrous au moyen de commande et/ou de traitement (7).

12. Moyen de mesure selon l'une des revendications 1 à 5, **caractérisé en ce que** la coque (8) en matière synthétique ou en matière expansée est moulée par injection ou expansée directement sur le tube de mesure (2) .

13. Moyen de mesure selon l'une des revendications 1 à 5, **caractérisé en ce que** la coque (8) est monobloc et est fendue longitudinalement.

14. Moyen de mesure selon l'une des revendications précédentes, **caractérisé en ce que** la coque (8) est formée d'une coque extérieure plus dure et d'une coque intérieure expansée ou insérée du côté intérieur.

15. Moyen de mesure selon l'une des revendications précédentes, **caractérisé en ce qu'**une ou plusieurs ouvertures de ventilation, qui mènent notamment au plan de montage, sont prévues dans la coque (8).

16. Moyen de mesure selon l'une des revendications précédentes, **caractérisé en ce qu'**au moins un plombage réalisé par fusion locale est prévu sur la coque (8) en matière thermoplastique, ou **en ce qu'**un élément de plombage est formé dans ou sur la coque.

17. Moyen de mesure selon l'une des revendications précédentes, **caractérisé en ce que** la coque (8) est réalisée à partir d'une matière thermoplastique, notamment expansible.

18. Moyen de mesure selon la revendication 17, **caractérisé en ce que** la matière est du polyuréthane (PU), du polystyrène (PS), du polyéthylène (PE) ou du polypropylène (PP) ou une matière synthétique régénérée expansée ou non expansée.
